# EUROPEAN PATENT APPLICATION

(11) **EP 4 811 091 A1**
(43) Date of publication of application: **23.09.2026**
(21) Application number: 26160935.8
(22) Date of filing: 26.02.2026
(51) Int. Cl.: G06F 3/0481, G06F 3/04847, G06F 3/04883, G06F 40/169

(54) **PROGRAM, DISPLAY METHOD, INFORMATION PROCESSING APPARATUS AND INFORMATION PROCESSING SYSTEM**

(30) Priority: 18.03.2025 JP 2025043818
(71) Applicant: Casio Computer Co., Ltd., Tokyo 151-8543 (JP)
(72) Inventor: Ono, Manato, Hamura-shi, Tokyo, 205-8555 (JP)
(74) Representative: Grünecker Patent- und Rechtsanwälte PartG mbB

(57) **Abstract**

A program that causes at least one controller of a computer to execute, performing a first process in which a parameter electronic sticky note for displaying a parameter of a predetermined object is displayed when the predetermined object is displayed in an electronic sticky note; in the first process, displaying the parameter electronic sticky note for displaying the parameter of an image object in response to the image object being displayed; and not displaying the parameter electronic sticky note for displaying the parameter of the handwriting object in response to the handwriting object being displayed.

## Description

### BACKGROUND OF THE INVENTION

### TECHNICAL FIELD

The present disclosure relates to a program, a display method, an information processing apparatus, and an information processing system.

### DESCRIPTION OF RELATED ART

Japanese Unexamined Patent Application Publication No. 2010-20534 describes an image processing apparatus in which an image placement and a display manner can be edited on a map, and in such apparatus, an edit menu for an image object is displayed by selecting the image object on a window.

### SUMMARY OF THE INVENTION

According to one aspect of the present disclosure, a program that causes at least one controller of a computer to execute,
performing a first process in which a parameter electronic sticky note for displaying a parameter of a predetermined object is displayed when the predetermined object is displayed in an electronic sticky note;
in the first process, displaying the parameter electronic sticky note for displaying the parameter of an image object in response to the image object being displayed; and
not displaying the parameter electronic sticky note for displaying the parameter of the handwriting object in response to the handwriting object being displayed.

### Effects of Invention

According to the present disclosure, an object can be suitably displayed.

### BRIEF DESCRIPTION OF DRAWINGS

FIG. 1 is a block diagram showing a functional structure of an information processing system.
FIG. 2 is a diagram showing an example of a display in an object display process.
FIG. 3 is a flowchart showing a flow of the object display process.
FIG. 4 is a diagram showing an example of the display in the object display process.
FIG. 5 is a flowchart showing the flow of the object display process.
FIG. 6 is a diagram showing an example of the display in the object display process.
FIG. 7 is a flowchart showing the flow of the object display process.
FIG. 8 is a flowchart showing the flow of the object display process.
FIG. 9 is a diagram showing an example of the display in the object display process.
FIG. 10 is a flowchart showing the flow of the object display process.
FIG. 11 is a flowchart showing the flow of the object display process.
FIG. 12 is a diagram showing an example of the display in the object display process.

### DETAILED DESCRIPTION

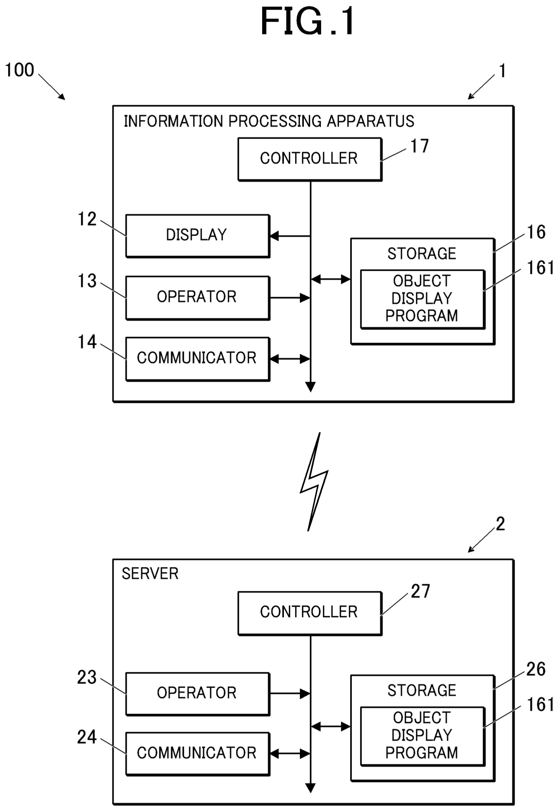

The following is a description of the embodiments of the present disclosure with reference to the drawings. As shown in FIG. 1, the information processing system 100 according to the present embodiment includes an information processing apparatus 1 and a server 2 that can communicate with each other. The information processing apparatus 1 is a computer capable of displaying various objects, including an image and a handwritten object. Specifically, the information processing apparatus 1 includes a display 12, an operator 13, a communicator 14, a storage 16, and a controller (processor) 17. The display 12 consists of, for example, a liquid crystal display and displays various information based on a display signal from the controller 17. The display 12 may be a touch screen that also serves as part of the operator 13. The operator 13 is an operation means by which a user performs various operations to operate the information processing apparatus 1, and includes, for example, a pointing device such as a mouse and a keyboard. The operator 13 outputs an operation signal corresponding to operation contents performed by the user to the controller 17. The communicator 14 is a communication module that transmits and receives data to and from an external device such as a server 2 through a predetermined communication network or other means.

The storage 16 is a memory that consists of a RAM (Random Access Memory), a ROM (Read Only Memory), etc., and includes for example, an HDD (Hard Disk Drive), an SSD (Solid State Drive), etc. The storage 16 stores various programs and data and also functions as a work area of the controller 17. The storage 16 stores various data, etc. necessary for executing the program. The controller 17 is composed of one or more CPUs (Central Processing Units), for example, and controls the operation of each part of the information processing apparatus 1. Specifically, the controller 17 operates the various parts of the information processing apparatus 1 based on the operation contents on the operator 13, etc., and also deploys programs stored in advance in the storage 16 and executes various processes in cooperation with the deployed programs.

The server 2, for example, includes an operator 23 that accepts user operations, a communicator 24 that communicates with the external device including the information processing apparatus 1, a storage 26 that stores various information, and a controller 27 that controls the operation of the server 2. The storage 26 stores, for example, an object display program 161 for executing an object display process described below. The object display program 161 is, for example, a web application delivered from the server 2 that provides the object display process described below on a browser. As described below, for example, the object display program may be in a form included in some kind of service (web application). The object display program 161 may be an application program stored in advance in the storage 16 of the information processing apparatus 1, or may be in the form of being executed on the server 2 so as to display a result of the execution of the program on the server 2 on the display 12 via the browser executed on the information processing apparatus 1. In other words, the controller 27 of the server 2 may control displaying on the display 12 of the information processing apparatus 1 by executing or generating data to execute various processes of the object display process. As an example in FIG. 1, the object display program 161 (a program including the object display program 161) is delivered from the server 2 to the information processing apparatus 1 in the form of the web application, and the object display program 161 is temporarily stored.

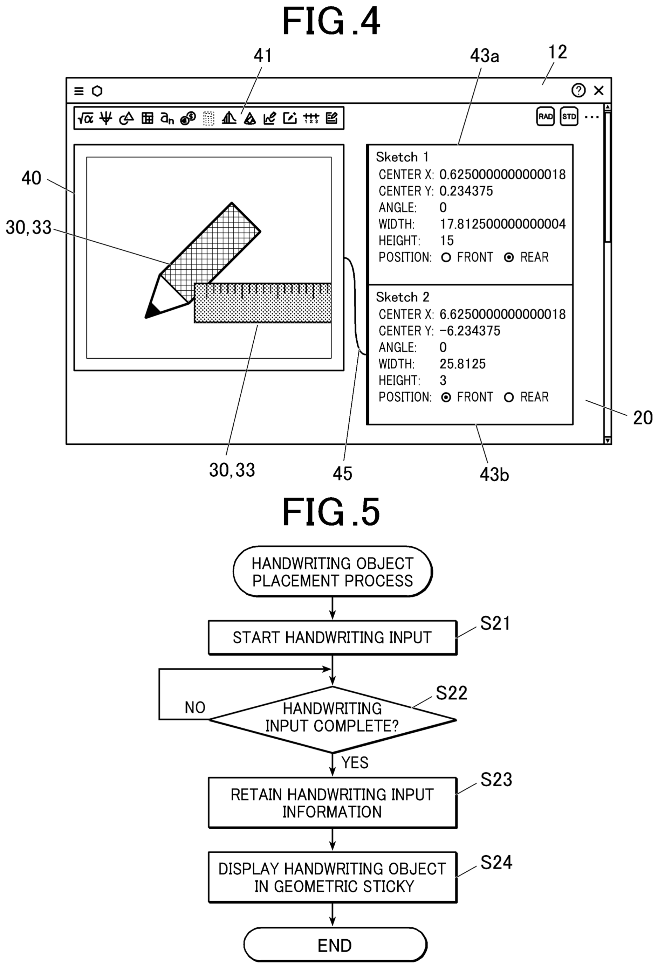

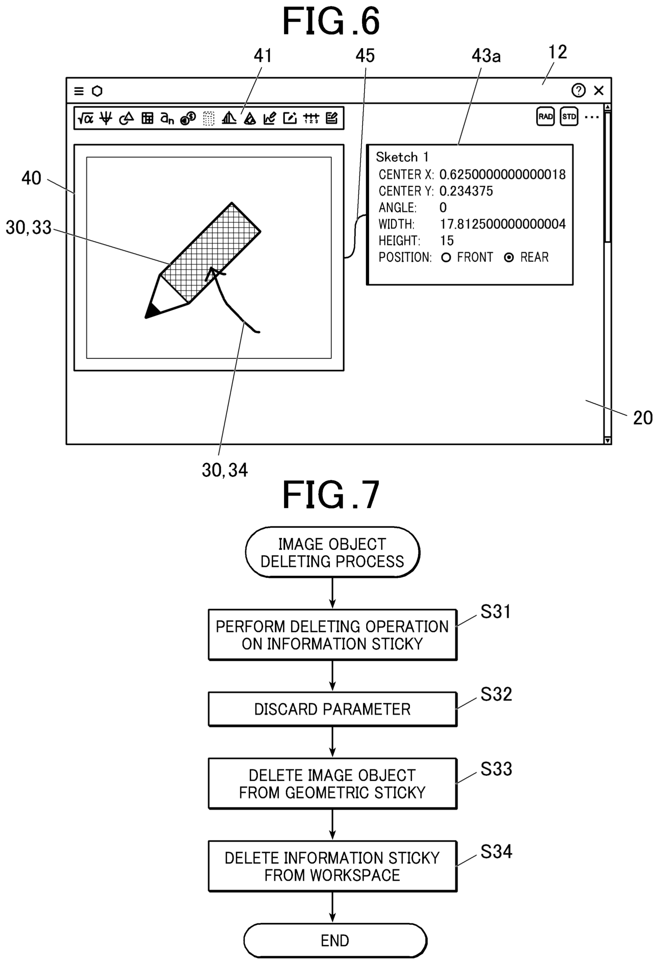

The following describes the operation of the information processing apparatus 1 when executing the object display process. The object display process is a process that displays various objects 30 on the display 12. The object 30 according to the present embodiment includes an image object 33 including image data and a handwriting object 34 created by the user's handwriting input (see FIG. 4, FIG. 6, etc.). For example, when the user accesses to a predetermined service (e.g., a mathematical tool) that includes an object display function via the browser of the information processing apparatus 1, the server sends the program for executing the predetermined service to the information processing apparatus 1. Here, the program for execution of the predetermined service includes the object display program 161, which may be, for example, various resources such as HTML, JavaScript, CSS, images, etc. In the information processing apparatus 1, the browser generates and displays the screen by analyzing and executing a group of files of the various resources. In response to the operation to execute an object display mode in a predetermined service being input based on user operation, the object display process is executed by the controller 17 cooperating with the browser to execute the object display program 161. A math tool is a tool that can, for example, display a predetermined electronic sticky note on a workspace 20 (described below) and accept input of a mathematical formula to create a graph corresponding to the formula, or create drawings or place objects on a geometric sticky 40 (electronic sticky note) (described below). Here, for example, the operation to display the workspace 20 is considered to be the operation to execute the object display mode.

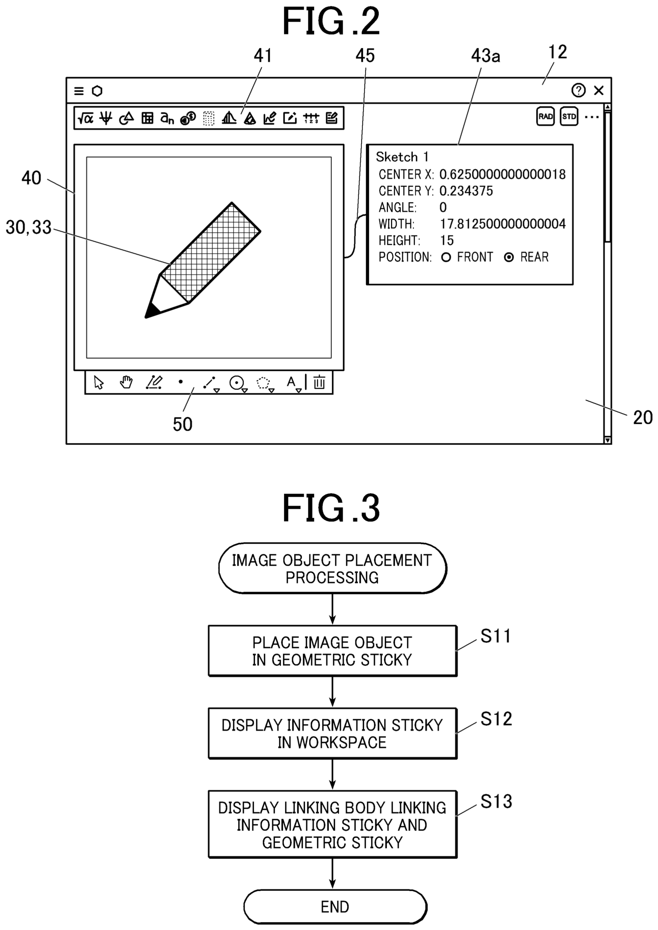

As shown in FIG. 2, when the object display process is executed, the controller 17 first displays the workspace 20 where the work is performed on the display 12. Hereafter, unless otherwise noted, all work will be performed within the workspace 20. At this time, the controller 17 displays a toolbar 41 with an array of multiple functions for performing various tasks within the workspace 20. Next, the controller 17 displays a geometric sticky 40 (electronic sticky note) that displays various objects 30 based on the user operation on the toolbar 41. At this time, the controller 17 displays an editing toolbar 50 with an array of multiple functions for performing various tasks within the geometric sticky 40. In the geometric sticky 40, operations on the editing toolbar 50 allow, for example, the drawing of geometric figures and the placement of the image objects 33 and the handwriting object 34, which are described below. The description of the editing toolbar 50 is omitted in the drawings, but it may, for example, always be displayed together with the geometric sticky 40, or it may be displayed in response to the user operation that calls the editing toolbar 50.

The following describes the process of placing the image object 33 on the geometric sticky 40 in the object display process. Here, it is assumed, without limitation, that the image object 33 is displayed in advance in the geometric sticky 40 and that an information sticky 43a, described below, corresponding to the above image object 33 is displayed in advance in the workspace 20. As shown in FIG. 3, the controller 17 first places the image object 33 in the geometric sticky 40 based on user operation (step S11; FIG. 4). In the example in FIG. 4, for example, based on the image file of a ruler read from the storage 16, the image object is placed in the geometric sticky 40 as the image object 33. Alternatively, for example, the process may be performed as follows, the image file is uploaded (sent) to the server, screen information or information instructing the display to display the image object 33 based on the image file is sent from the server to the information processing apparatus 1, and based on the received information, the image object is placed in the geometric sticky 40 as the image object 33. At this time, the controller 17 displays the information sticky 43b for displaying the parameter of the image object 33 in the workspace 20 together with the image object 33 (step S12). The information sticky 43b corresponds to an example of a parameter electronic sticky note according to the present disclosure. As the parameter of the image object 33, the information sticky 43b displays in text form the information such as coordinates of a display position (center position), display angle, display size (width and height), and front-rear position (front side or rear side from an axis or a grid). The information sticky 43b allows the parameter of the image object 33 to be edited by rewriting the information displayed. The front-rear position of the image object 33 may also be used as information that also serves as an order of overlap (front-rear position) between the image object 33 and other image objects. When this information representing the order of overlap is changed by user operation, the order of overlap of the image object 33 displayed in the geometric sticky 40, or the order of overlap (front-rear position) relative to the axis or grid, is changed. The information sticky (parameter electronic sticky note) should at least display information about the object.

Next, the controller 17 displays a linking body 45 that links the geometric sticky 40 in which the image object 33 is displayed with the information sticky 43b of this image object 33 (step S13). According to the present embodiment, the geometric sticky 40 and the information sticky 43b are linked by the string-like linking body 45. Here, the information sticky 43b of the image object 33 and the information sticky 43a of the other image object 33 displayed within the same geometric sticky 40 are aligned integrally and linked to the geometric sticky 40 by the linking body 45.

The following describes the process of placing the handwriting object 34 on the geometric sticky 40 in the object display process. The handwriting object 34 is the object that is placed, for example, by drawing any course desired by the user at a location desired by the user based on the user's handwriting input operation (e.g., mouse dragging or pointer operation). Here, it is assumed, without limitation, that the image object 33 is displayed in advance in the geometric sticky 40 and the information sticky 43a corresponding to the above image object 33 is displayed in advance in the workspace 20. As shown in FIG. 5, first the controller 17 initiates handwriting input within the geometric sticky 40 based on the user operation (step S21). Next, the controller 17 determines whether or not the handwriting input is complete (step S22), and in response to determining determined that it is not complete (step S22; No), the controller 17 repeats step S22. Whether or not the handwriting input is complete is determined by, for example, whether or not the course of the handwriting has been interrupted. On the other hand, in response to determining that the handwriting input is complete in step S22 (step S22; Yes), the controller 17 records (retains) the parameter of the handwriting input course in the storage 16 (step S23). The controller 17 then displays the course of the handwriting input as the handwriting object 34 on the geometric sticky 40 (step S24; FIG. 6). At this time, unlike the case of the display of the image object 33 described above, the information sticky displaying the parameter of the handwriting object 34 is not displayed. Thus, the process of placing the handwriting object 34 ends.

Then, among the object display processes, the process of deleting the image object 33 is described. As shown in FIG. 7, first the controller 17 performs a delete operation (input) on the information sticky 43b of the image object 33 based on user operation (step S31). Here, the user calls up an "X" mark, which is a delete button, on the information sticky 43b, for example, by a predetermined operation, and presses the mark. Next, the controller 17 discards the parameters of the information sticky 43b that is operated to be deleted and erases the parameter from the storage 16 (step S32). Next, the controller 17 deletes (erases) from the geometric sticky 40 the image object 33 of the information sticky 43b that is operated to be deleted (step S33). Next, the controller 17 deletes (erases) from the workspace 20 the information sticky 43b that is operated to be deleted (step S34). With this, the process of deleting the image object 33 ends.

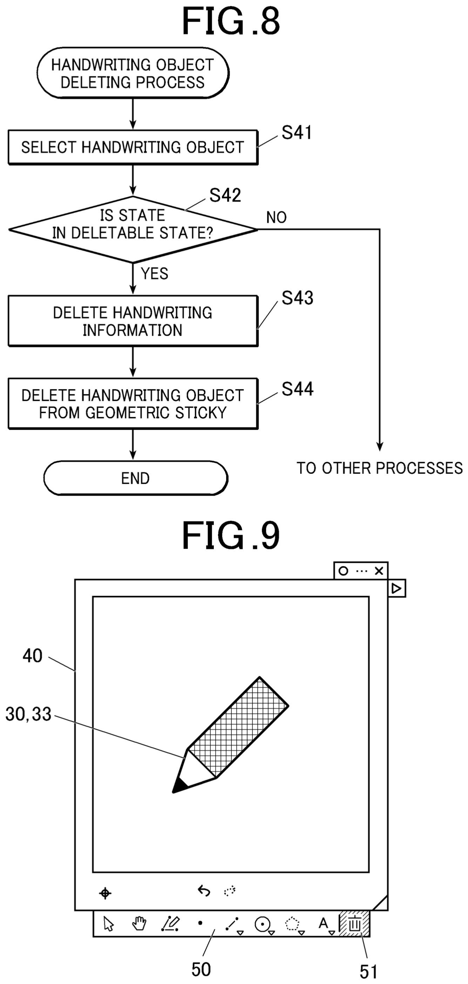

The following describes the process of deleting the handwriting object 34 in the object display process. As shown in FIG. 8, first the controller 17 selects the handwriting object 34 by user operation (step S41), and then determines whether an inside of the workspace 20 is in a deletable state in which the object 30 can be deleted (step S42). According to the present embodiment, as shown in FIG. 9, a delete icon 51 in the editing toolbar 50 of the geometric sticky 40 is made active (enabled state) by pressing and the deletable state is activated. In response to determining in step S42 that the state is not deletable (step S42; No), the controller 17 moves to other processes. At this time, the operated handwriting object 34 is not in the selected state. On the other hand, in response to determining in step S42 that the state is deletable (step S42; Yes), the controller 17 deletes (erases) the parameter of the handwriting object 34 (step S43). The controller 17 then deletes (erases) the handwriting object 34 from the geometric sticky 40 (step S44). Thus, the process of deleting the handwriting object 34 ends.

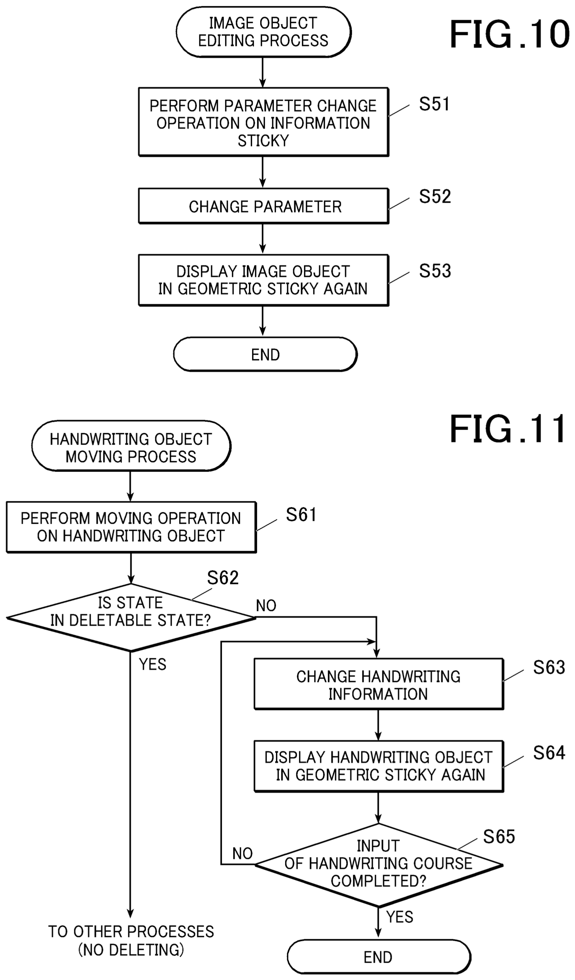

The following describes the process of editing (changing) the parameter of the image object 33 in the object display process. As shown in FIG. 10, when an operation is performed by the user to change the parameter for the information sticky 43b of the image object 33 (step S51), the controller 17 changes and stores the operated parameter (step S52). Next, the controller 17 redisplays the image object 33 on the geometric sticky 40 in correspondence with the changed parameter (step S53). Thus, editing of the image object 33, such as moving or changing the shape, for example, is done by input operation to the information sticky 43b. This allows the editing operation of the image object 33 to be different from the editing operation of other types of the object 30, and this prevents an occurrence of erroneous operation of editing the object 30 that is not intended to be edited. Thus, the editing process of the information sticky 43b ends.

The following describes the process of moving the handwriting object 34 in the object display process. As shown in FIG. 11, when a moving operation (e.g., drag operation) is performed by the user on the handwriting object 34 (step S61), the controller 17 determines whether the inside of the workspace 20 is in the deletable state in which the object 30 can be deleted (step S62). In response to determining in step S62 that the state is deletable (step S62; Yes), the controller 17 moves to other processes. At this time, the handwriting object 34 that is operated to be moved is not deleted. On the other hand, In response to determining in step S62 that the state is not deletable (step S62; No), the controller 17 changes the parameter of the handwriting object 34 that is operated to be moved and stores the parameter (step S63). Next, the controller 17 redisplays the handwriting object 34 on the geometric sticky 40 in correspondence with the changed parameter (step S64). In other words, the handwriting object 34 is moved. Thus, the process of moving the handwriting object 34 ends.

As described above, according to the present embodiment, when the predetermined object 30 is displayed within the geometric sticky 40 (electronic sticky note), the processing (the first process) is performed to display the information sticky (parameter electronic sticky note) for displaying the parameter of the object 30. In response to the image object 33 being displayed, the information sticky 43b is displayed to display the parameter of the image object 33. On the other hand, in response to the handwriting object 34 being displayed, the parameter electronic sticky note for displaying the parameter of the handwriting object 34 is not displayed. In other words, the display by the information processing system indicates that the image object 33 can be edited by the user while the handwriting object 34 cannot be edited by the user. Regarding the image object 33, the above enables the parameter to be displayed using the information sticky 43b. Turning to the handwriting object 34 in which the display position, the shape, and the size are determined by the user, and in which editing is rarely requested in the first place, the parameter electronic sticky note is hidden. This can improve visibility and other usability features. Thus, the object 30 can be suitably displayed. By hiding the parameter electronic sticky note for the handwriting object for which there is little demand for displaying (editing) the information, the user can easily operate the workspace 20 even when multiple objects including handwriting objects are displayed, thereby improving user operation convenience. In addition, by hiding the parameter electronic sticky note pertaining to the handwriting object, the information processing system 100 can prevent accidental editing of the handwriting object 34 for which there is little demand for editing and reduce the processing load on the computer in display control. In other words, the presentation of information according to the present embodiment (the parameter electronic sticky note is hidden for the handwriting object 34) reliably assists the user in performing a technical task (operation for editing the image object 33) by means of a human-machine interaction process.

According to the present embodiment, the parameter of the image object 33 (coordinates of the display position, display size, display angle, etc.) is edited based on the user operation on the information sticky 43b. This allows for greater user convenience in adjusting the image object 33.

According to the present embodiment, in response to the handwriting object 34 being selected in the deletable state (first state), the handwriting object 34 is deleted. In response to the state being not set to the deletable state and the user operation to move the handwriting object 34 being performed, the handwriting object 34 will be moved in correspondence with the user operation. This improves the usability of the geometric sticky 40 by allowing the user to perform editing functions that may be necessary (e.g., delete and move) while maintaining visibility by not displaying an editing region of the handwriting object 34.

According to the present embodiment, the linking body 45 that links the geometric sticky 40 (electronic sticky note), on which the image object 33 is displayed, with the information sticky 43b of the image object 33 is displayed. This allows the user to easily visually determine the correspondence between each image object 33 and its information sticky 43b, even in a case in which, for example, multiple image objects 33 are displayed. Even in a case in which the multiple geometric stickies 40 and the image objects are placed on the workspace 20, the user can easily grasp the image object that reflects the editing of the information in the information sticky 43b, improving the convenience of user operation. In other words, the presentation of information according to the present embodiment (display of the linking body 45 linking the geometric sticky 40, in which the image object 33 is displayed, and the information sticky 43b of the image object 33) reliably assists the user in performing the technical task by means of a human-machine interaction process.

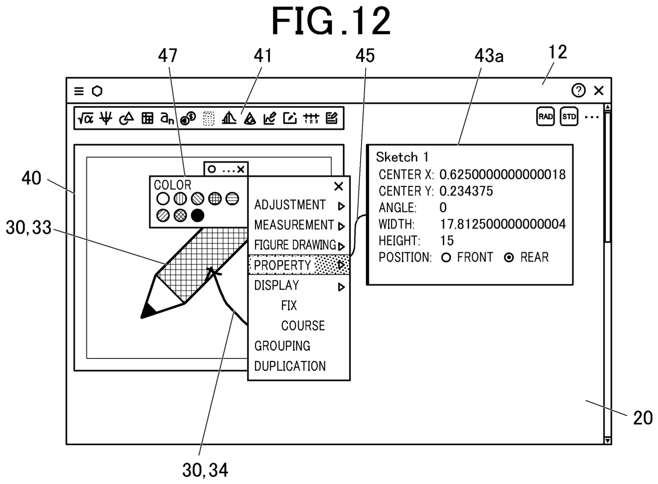

The embodiments of the present disclosure are described above, but the details of the above embodiments can be changed as needed without departing from the scope of the invention. For example, based on the user operation of the handwriting object 34, the information on the handwriting object 34 may be displayed so as to be editable. Specifically, as shown in FIG. 12, for example, an edit area 47 (editing region) may be displayed for editing the information of the handwriting object 34 by user operation to enable the user to change the information. In the example in FIG. 12, for example, the color can be changed as the information on the handwriting object 34. The edit area 47 is to contain at least one of the colors and line types of the handwriting object 34 as an edit item. When the controller 17 accepts the editing content based on the user operation to the edit area 47, the handwriting object 34 reflecting the editing content is displayed in the geometric sticky 40. When the user operation to end editing is accepted, the controller 17 then ends (deletes) the display of the edit area 47. Thus, by displaying the edit area 47 for editing the handwriting object only when editing is necessary, visibility can be maintained and user operation convenience can be enhanced. Further, in response to the handwriting object 34 being displayed, the information sticky (editing region) that displays the parameter of the handwriting object 34 in an editable manner may be displayed in the workspace 20.

The information processing apparatus can be any device that displays the object 34 including the image and handwriting on the display 12, such as a smartphone, tablet terminal, PC or learning terminal, or a server that provides a program to such device. Here, the device to which the aforementioned server provides the program may be equipped with a browser function, and the results of program execution on the server may be displayed by the browser function. The program that displays the object may be a dedicated drafting (figure drawing) application, or may be a program including an object display functionality as one of a variety of functions, such as spreadsheet software or mathematical tools.

In addition to the flash memory of the storage 16, information recording media such as the HDD (Hard Disk Drive), the SSD (Solid State Drive), CD-ROM, etc. can be applied as computer-readable media for the program according to the present disclosure. A carrier wave (carrier wave) is also applicable as a medium for providing the data for the program of the present disclosure via communication lines.

The embodiments and modifications of the present disclosure are described above. The technical scope of the present disclosure is not limited to the embodiments and modifications described above, but includes the scope of the invention described in the claims and their equivalents.

## Claims

1. A program that causes at least one controller (17) of a computer (1) to execute,
performing a first process in which a parameter electronic sticky note for displaying a parameter of a predetermined object is displayed when the predetermined object is displayed in an electronic sticky note;
in the first process, displaying the parameter electronic sticky note for displaying the parameter of an image object in response to the image object being displayed; and
not displaying the parameter electronic sticky note for displaying the parameter of the handwriting object in response to the handwriting object being displayed.

2. The program according to claim 1,
further comprising performing a process in which editing of the parameter of the image object is accepted based on the user operation of the parameter electronic sticky note for displaying the parameter of the image object, and the image object is displayed in the electronic sticky note reflecting an editing content,
wherein the parameter electronic sticky note for displaying the parameter of the image object includes coordinates of a display position, a display size, and a display angle as the parameter of the image object.

3. The program according to claim 2, wherein the parameter electronic sticky note for displaying the parameter of the image object includes information indicating an order of overlap of the image object, and editing of the information indicating the order of overlap is accepted, the order of overlap of the image object is changed based on the editing content, and the image object is displayed on the electronic sticky note according to the changed order.

4. The program according to claim 1 or 2,
further comprising performing a second process in which editing of the handwriting object is accepted based on the user operation on the handwriting object and the handwriting object is displayed on the electronic sticky note reflecting an accepted editing content,
wherein, in the second process,
in response to the handwriting object being selected in a state that a first state in which the handwriting object can be deleted is set, the handwriting object is deleted, and
in response to the first state being not set and the user operation to move the handwriting object being performed, the handwriting object is moved corresponding to the user operation.

5. The program according to claim 1,
further comprising performing a third process in which an editing region for editing the handwriting object is displayed on a display section (12) based on the user operation on the handwriting object, and the handwriting object is displayed on the electronic sticky note reflecting an accepted editing content based on the user operation on the editing region,
wherein, in the third process,
the editing region includes at least one of a color and a line type of the handwriting object as an edit item of the handwriting object, and the display of the editing region is deleted when the operation to end editing is accepted.

6. The program according to any one of claims 1 to 5, wherein in the first process, a linking body is displayed in a state linking the electronic sticky note on which the image object is displayed and the parameter electronic sticky note for displaying the parameter of the image object.

7. A display method executed by at least one controller (17) of a computer (1), the method comprising:
performing a first process in which a parameter electronic sticky note for displaying a parameter of a predetermined object is displayed when the predetermined object is displayed in an electronic sticky note;
in the first process, displaying the parameter electronic sticky note for displaying the parameter of an image object in response to the image object being displayed; and
not displaying the parameter electronic sticky note for displaying the parameter of the handwriting object in response to the handwriting object being displayed.

8. An information processing apparatus (1) comprising:
at least one controller (17), wherein the controller executes,
performing a first process in which a parameter electronic sticky note for displaying a parameter of a predetermined object is displayed when the predetermined object is displayed in an electronic sticky note;
in the first process, displaying the parameter electronic sticky note for displaying the parameter of an image object in response to the image object being displayed; and
not displaying the parameter electronic sticky note for displaying the parameter of the handwriting object in response to the handwriting object being displayed.

9. An information processing system comprising:
a server (2);
a terminal device (1) that is configured to be able to communicate with the server; and
at least one controller (17), wherein the controller executes,
performing a first process in which a parameter electronic sticky note for displaying a parameter of a predetermined object is displayed when the predetermined object is displayed in an electronic sticky note or generating data for performing the first process;
in the first process, displaying the parameter electronic sticky note for displaying the parameter of an image object in response to the image object being displayed; and
not displaying the parameter electronic sticky note for displaying the parameter of the handwriting object in response to the handwriting object being displayed.
